(19) Europäisches Patentamt

European Patent Office

Office européen des brevets

(11) **EP 1 116 952 B1**

(12) **EUROPÄISCHE PATENTSCHRIFT**

(45) Veröffentlichungstag und Bekanntmachung des Hinweises auf die Patenterteilung:
**11.10.2006 Patentblatt 2006/41**

(51) Int Cl.:
*G01N 27/72* *(2006.01)*

(21) Anmeldenummer: **00125457.2**

(22) Anmeldetag: **21.11.2000**

(54) **Verfahren zur berührungslosen Planheitsmessung von Metallbändern aus ferromagnetischen Werkstoffen**

Method for contact-free measurement of the planarity of ferromagnetic metal sheets

Méthode pour la mesure de planarité de tôles de métaux ferromagnétiques

(84) Benannte Vertragsstaaten:
**AT BE CH CY DE DK ES FI FR GB GR IE IT LI LU MC NL PT SE TR**

(30) Priorität: **12.01.2000 DE 10000845**

(43) Veröffentlichungstag der Anmeldung:
**18.07.2001 Patentblatt 2001/29**

(73) Patentinhaber: **BWG BERGWERK- UND WALZWERK-MASCHINENBAU GMBH D-47051 Duisburg (DE)**

(72) Erfinder:
- **Noé, Rolf, Dipl.-Ing.**
  **45478 Mülheim/Ruhr (DE)**
- **Noé, Andreas, Dr. mont., Dipl.-Ing.**
  **47647 Kerken (DE)**
- **Baukloh, Dieter, Dipl.-Ing.**
  **47053 Duisburg (DE)**
- **Sonntag, Stefan , Dipl.-Phys.**
  **47249 Duisburg (DE)**

(74) Vertreter: **Albrecht, Rainer Harald et al Patentanwälte Andrejewski, Honke & Sozien, Postfach 10 02 54 45002 Essen (DE)**

(56) Entgegenhaltungen:
EP-A- 0 394 158          EP-A1- 0 646 790
EP-A2- 0 666 470          WO-A1-99/24803
DE-A- 3 037 932          DE-A1- 4 116 208
SU-A- 1 252 718          US-A- 1 676 632
US-A- 2 912 642          US-A- 3 742 357
US-A- 4 070 614          US-A- 4 686 471
US-A- 4 881 030          US-A- 5 012 189
US-A- 5 028 869

- YANG D X ET AL: "EVALUATION OF MECHANICAL PROPERTIES OF MAGNETIC MATERIALS USIN A NON-DESTRUCTIVE METHOD" IEEE TRANSACTIONS ON MAGNETICS, IEEE INC. NEW YORK, US, Bd. 37, Nr. 4, PART 1, Juli 2001 (2001-07), Seiten 2758-2760, XP001111944 ISSN: 0018-9464
- GRIMBERG R ET AL: "Magnetic sensor used for the determination of fatigue state in ferromagnetic steels" SENSORS AND ACTUATORS A, ELSEVIER SEQUOIA S.A., LAUSANNE, CH, Bd. 81, Nr. 1-3, April 2000 (2000-04), Seiten 371-373, XP004191328 ISSN: 0924-4247

Bemerkungen:
Die Akte enthält technische Angaben, die nach dem Eingang der Anmeldung eingereicht wurden und die nicht in dieser Patentschrift enthalten sind.

**Beschreibung**

Die Erfindung betrifft ein Verfahren zur berührungslosen Planheitsmessung von Metallbändern aus ferromagnetischen Werkstoffen.

Es sind Verfahren zur Planheitsmessung von Metallbändern bekannt, wonach praktisch eine indirekte Messung der Bandplanheit durch Messung der Bandspannungsverteilung über die Bandbreite mit Hilfe von Planheitsmessrollen erfolgt. Die Bandspannungsverteilung lässt dabei Rückschlüsse auf die Bandplanheit zu.

Unabhängig davon kennt man eine direkte Messung der Bandplanheit an Metallbändern im Stillstand und folglich zugentlasteten Zustand.

Nach einer älteren noch nicht zum vorbekannten Stand der Technik gehörenden Patentanmeldung der Anmelderin werden zur berührungslosen Planheitsmessung von Metallbändern im Zuge des Durchlaufens von Bandprozesslinien oder Kaltwalzwerken in das durchlaufende Metallband Longitudinalwellen und/oder Transversalwellen im Zuge einer Ultraschall-Beaufschlagung eingeschaltet und die Laufzeiten der Longitudinalwellen und/oder Transversalwellen gemessen. Anhand der Änderungen der Schallgeschwindigkeiten der Longitudinalwellen und/oder Transversalwellen wird zumindest die longitudinale und/oder transversale Spannungsverteilung der über die Banddicke integrierten Längsspannungen erfasst. Dann werden aus der Spannungsverteilung die korrespondierende Längs-Resteigenspannungsverteilung und die daraus resultierenden Unplanheiten in dem betreffenden Metallband ermittelt (vgl. DE-19 911 548).

Der Erfindung liegt die Aufgabe zugrunde, ein Verfahren zur berührungslosen Planheitsmessung von Metallbändern aus ferromagnetischen Werkstoffen zu schaffen, welches gleichsam Online eine zuverlässige und genaue Planheitsmessung in kostengünstiger und platzsparender Weise einfach und schnell ermöglicht.

Zur Lösung dieses technischen Problems ist Gegenstand der Erfindung ein Verfahren nach Anspruch 1.

Die Überlagerungspermeabilität ergibt sich bei selbst kleinen Veränderungen des angelegten Magnetfeldes und ändert sich in typischer Weise mit dem angelegten Magnetfeld. Das Maximum $\mu_{\Delta max}$ der Kurve der geänderten Überlagerungspermeabilität, der zugehörige Wert $H_{C\mu}$ der tangentialen Magnetfeldstärke und die Aufweitung der Änderungskurve bei unterschiedlichen $\Delta H\mu$ sind hier die elektromagnetischen Messgrößen. Zusätzlich erfährt das eingebrachte Magnetfeld durch Wechselwirkung mit dem Bandmaterial Abweichungen von einem zunächst sinusförmigen zeitlichen Verlauf. Diese Abweichungen werden mittels einer Fourieranalyse des Zeitsignals bestimmt. Die daraus resultierenden elektromagnetischen Messgrößen sind der Klirrfaktor K und die Koerzitivfeldstärke $H_{co}$ (vgl. EP 0 365 622). - In beiden Fällen stellen diese Messgrößen und ihre Veränderungen eine Funktion der mechanischen Spannungen dar.

Durch die Kombination mehrerer dieser elektromagnetischen Messgrößen wird die auf einem elektromagnetischen Verfahren basierende berührungslose Planheitsmessung überraschenderweise unabhängig von den verschiedenen ferromagnetischen Werkstoffen. Das gilt insbesondere hinsichtlich des Gefügeaufbaus und der Festigkeitseigenschaften und folglich auch hinsichtlich der Streckengrenze und der Zugfestigkeit der in Frage kommenden Werkstoffe. Darüber hinaus muss überraschen, dass bei Verwendung mehrerer elektromagnetischer Messgrößen zur Ermittlung der Längs-Resteigenspannungen die Empfindlichkeit gegen Luftspaltänderungen zwischen der oder den Messvorrichtungen und dem durchlaufenden Metallband nur minimal ist und vernachlässigt werden kann. Vielmehr wird eine hohe Messgenauigkeit und wohl definierte Aussage über ggf. existierende Unplanheiten in dem zu untersuchenden Metallbändern erreicht. Hinzu kommt, dass die berührungslose Planheitsmessung nach Lehre der Erfindung bis zu Temperaturen von 500°C mit hinreichender Genauigkeit durchgeführt werden kann.

Weitere erfindungswesentliche Maßnahmen sind im folgenden aufgeführt. So sieht die Erfindung vor, dass anhand der Änderungen der Messgrößen die longitudinale und/oder transversale Spannungsverteilung der über die Banddicke integrierten Querspannungen ermittelt und dann aus dieser Spannungsverteilung die korrespondierenden Quer- und Resteigenspannungsverteilung und die daraus resultierenden Unplanheiten in dem Metallband ermittelt werden. Als Messgrößen kommen hier wiederum sowohl die elektromagnetischen Messgrößen in Frage, die aus der Änderung der Überlagerungspermeabilität mit der tangentialen Magnetfeldstärke resultieren als auch die elektromagnetischen Messgrößen, die aus der Oberwellenanalyse des Zeitsignals der tangentialen Magnetfeldstärke resultieren. Erfindungsgemäß werden über die Bandbreite und/oder Bandlänge 80 bis 800 Messungen pro Sekunde zur Ermittlung von Messgrößenänderungen durchgeführt. Ferner besteht im Rahmen der Erfindung die Möglichkeit, die Streckgrenze des betreffenden Bandmaterials und den Bandzug zu ermitteln, z. B. wechselweise mit der Ermittlung der elektromagnetischen Messgrößen und daraus resultierenden Unplanheiten, und zwar mit der bzw. den gleichen Messvorrichtung. Vorzugsweise werden die Messungen auf der Bandoberseite und/oder auf der Bandunterseite durchgeführt. Dabei kann der Luftspalt zwischen dem oder den Messvorrichtungen (Elektromagnet und Magnetfeldstärkesensor) in Abhängigkeit von der Banddicke geändert werden. Im Rahmen der Erfindung gelingt die berührungslose Planheitsmessung bis zu Banddicken von 5 mm einwandfrei. Die Magnetisierung des jeweils durchlaufenden Metallbandes zur Erfassung und Auswertung der elektromagnetischen Messgrößen kann traversierend über die Bandbreite erfolgen, kann aber auch in mehreren verschiedenen Richtungen in der Bandebene vorgenommen werden, z. B. in Bandlängs-, Bandquer- und Banddiagonalrichtung stationär oder traversierend erfolgen. Ferner empfiehlt die Erfindung, dass zur Kalibrierung der durch die elektromagnetischen Messgrößen ermittelten Längsspannungen der mittlere Bandlängszug über eine separate Bandzugmessvorrichtung, z. B. Bandzugmessrolle als Kennwert für die Längsspannungen gemessen wird.

Im folgenden wird die Erfindung anhand einer lediglich ein Ausführungsbeispiel darstellenden Zeichnung näher erläutert. Es zeigen

Fig. 1  eine Vorrichtung zur berührungslosen Online-Planheitsmessung von Metallbändern in schematischer Seitenansicht, die in dem erfindungsgemäßen Verfahren verwendet werden Kann,

Fig. 2  den Gegenstand nach Fig. 1 von Untenansicht mit stationären Elektromagneten und Magnetfeldstärkesensoren,

Fig. 3  eine abgewandelte Ausführungsform des Gegenstandes nach Fig. 1 mit einem traversierenden Elektromagneten und Magnetfeldstärkesensor,

Fig. 4  eine weitere abgewandelte Ausführungsform des Gegenstandes nach Fig. 1 mit mehreren in verschiedene Richtungen ausgerichteten Elektromagneten und Magnetfeldstärkesensoren, die auch traversieren können,

Fig. 5  eine Hystereseschleife bzw. -kurve zur Definition der Überlagerungspermeabilität,

Fig. 6  eine Änderungskurve der Überlagerungspermeabilität über der tangentialen Magnetfeldstärke,

Fig. 7  den zeitlichen sinusförmigen Verlauf des eingebrachten Magnetfeldes zur Oberwellenanalyse des Zeitsignals der tangentialen Magnetfeldstärke und

Fig. 8-11  den Einfluss mechanischer Spannungen σ auf die betreffenden elektromagnetischen Messgrößen.

In den Figuren ist eine Vorrichtung dargestellt, die im erfindungsgemäßen verfahren zur berührungslosen Planheitsmessung von Metallbändern 1 aus ferromagnetischen Werkstoffen im Zuge des Durchlaufens von Bandprozesslinien oder Kaltwalzwerken verwendet werden kann. Bei dem Ausführungsbeispiel lassen sich zwischen einem Dressiergerüst 2 und einem Spannrollensatz 3 mit Bandzugmessung eine unterhalb der Bandoberfläche des durchlaufenden Metallbandes 1 mit vorgegebenem Abstand zur Bandoberfläche angeordneter Elektromagnet 4 mit einer Erregerspule 5 zum Durchsteuern der Hysteresekurve des betreffenden Metallbandes 1 und ein Magnetfeldstärkesensors 6 zum Erfassen der tangentialen Magnetfeldstärke erkennen. Der Magnetfeldstärkesensor 6 ist lediglich andeutungsweise an einen Schaltkreis 7 zum Auswerten der den zeitlichen Verlauf der tangentialen Magnetfeldstärke bestimmenden elektromagnetischen Messgrößen angeschlossen. Der Elektromagnet 4 und der Magnetfeldstärkesensor 6 sind nach dem Ausführungsbeispiel unterhalb der Bandoberfläche des durchlaufenden Metallbandes mit vorgegebenem Abstand und folglich Luftspalt zur Bandoberfläche angeordnet. Die Magnetpole 8 des Uförmigen jochartigen Elektromagneten 4 und der zwischen beiden U-Schenkeln und folglich Magnetpolen 8 befindliche Magnetfeldstärkesensor 6 sind in gleicher Ebene angeordnet. Der Elektromagnet 4 und der Magnetfeldstärkesensor 6 können eine mittels eines Liftes anhebbare und absenkbare Baueinheit bilden, was hier nicht gezeigt ist.

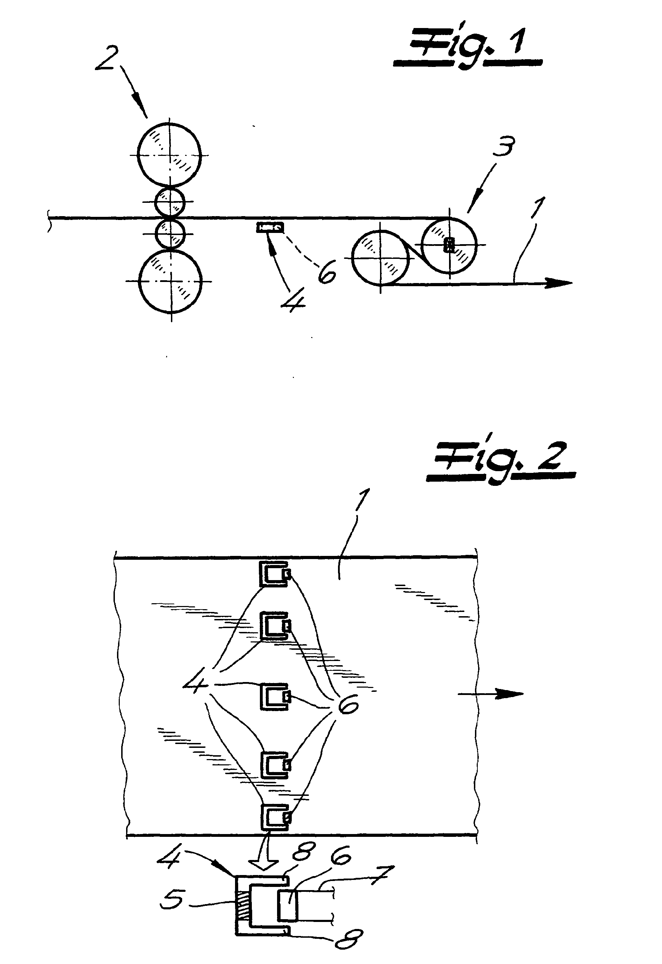

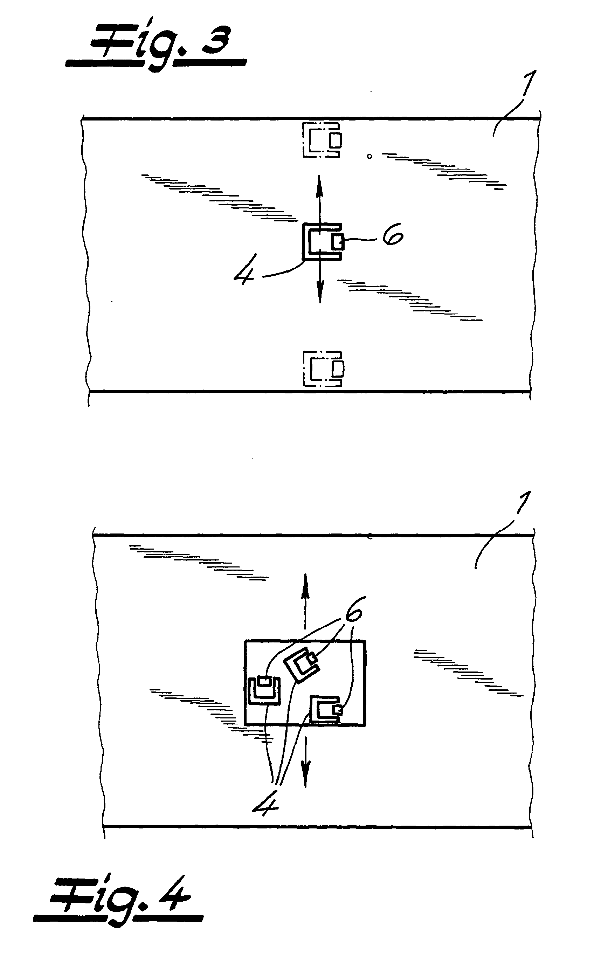

Nach dem Ausführungsbeispiel gemäß Fig. 2 sind mehrere Elektromagnete 4 und Magnetfeldstärkesensoren 6 in vorgegebenen Abständen über die Breite des durchlaufenden Metallbandes 1 angeordnet. Es besteht aber nach Fig. 3 auch die Möglichkeit, lediglich einen Elektromagneten 4 und Magnetfeldstärkesensor 6 über die Bandbreite traversieren zu lassen. Nach Fig. 4 können auch mehrere Elektromagnete 4 und Magnetfeldstärkesensoren 6 in verschiedenen Richtungen, z. B. in Bandlängs-, Bandquer- und Banddiagonalrichtung ausgerichtet sein und zusätzlich traversieren. - In beiden Fällen ist das Traversieren durch Doppelpfeile angedeutet.

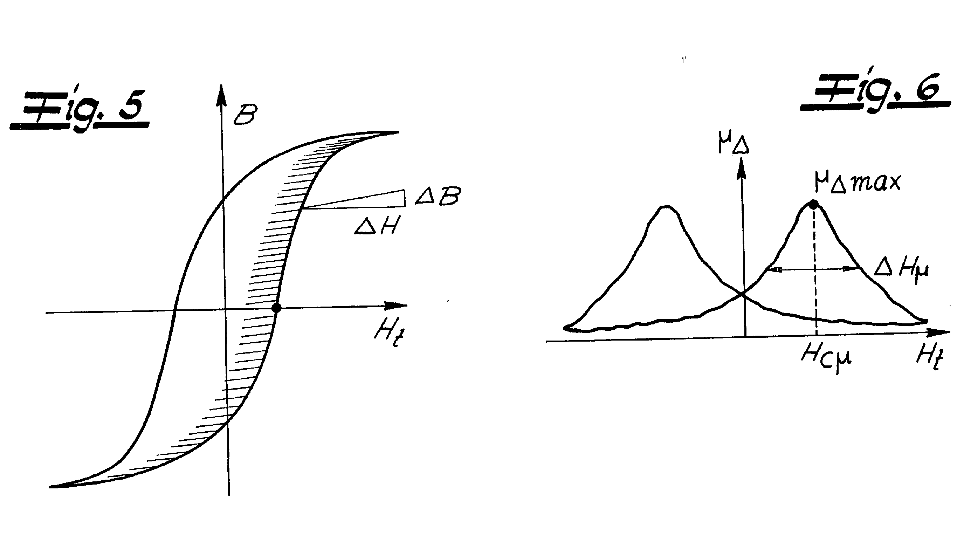

Fig. 5 definiert die Überlagerungspermeabilität

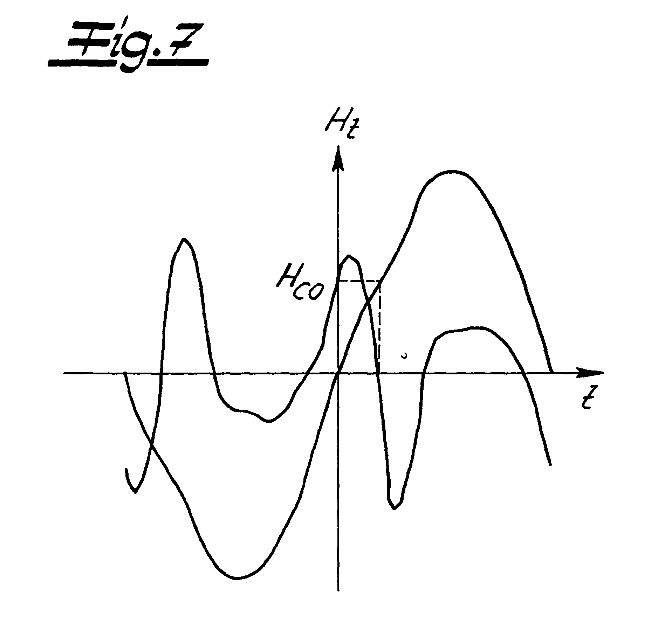

$$\mu_\Delta = \frac{\Delta B}{\Delta H}\ .$$ Fig. 6 lässt eine Änderung der Überlagerungspermeabilität in Abhängigkeit von der tangentialen Magnetfeldstärke erkennen. Aus dieser Änderung werden das Maximum $\mu_{\Delta max}$, der zugehörige Wert $H_{C\mu}$ der tangentialen Magnetfeldstärke und die Aufweitung der Änderungskurve bei unterschiedlichen $\Delta H_\mu$-Werten als elektromagnetische Messgrößen ermittelt.

Nach Fig. 7 wird eine Oberwellenanalyse des Zeitsignals der tangentialen Magnetfeldstärke ermöglicht. Das eingebrachte Magnetfeld erfährt durch Wechselwirkung mit dem Bandmaterial Abweichungen von zunächst einem zeitlichen sinusförmigen Verlauf. Diese Abweichungen werden mittels Fourieranalyse des Zeitsignals bestimmt, um den Klirrfaktor K und die Koerzitivfeldstärke $H_{co}$ als elektromagnetische Messgrößen zu ermitteln. Insoweit wird auf EP 0 365 622 verwiesen.

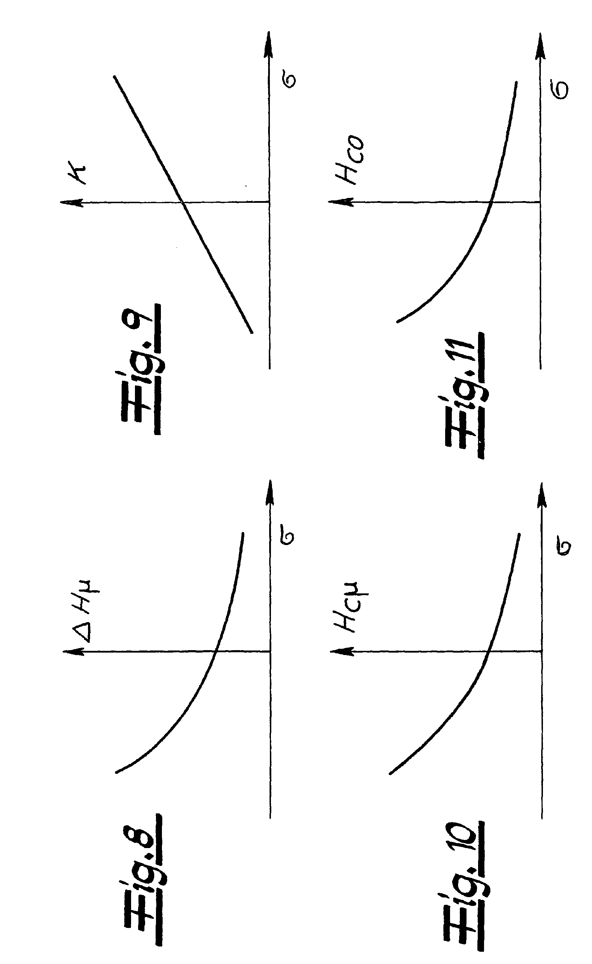

Schließlich zeigen die Kurven in den Fig. 8 bis 11 den Einfluss mechanischer Spannungen auf die elektromagnetischen Messgrößen $\Delta H_\mu$, $H_{C\mu}$, $H_{co}$ und K.

**Patentansprüche**

1. Verfahren zur berührungslosen Planheitsmessung von Metallbändern aus ferromagnetischen Werkstoffen im Zuge des Durchlaufens von Bandprozesslinien oder Kaltwalzwerken, wonach

    - das betreffende Metallband in einem Magnetfeld eines mit einem Wechselstrom gespeiste Erregers magnetisiert wird, indem die Hysteresekurve des Metallbandes mit der Frequenz des Wechselstroms durchgesteuert wird und
    - die durch den Erreger erzeugte tangentiale Magnetfeldstärke auf der Bandoberfläche mit Hilfe eines Magnetfeldstärkesensors während der Durchsteuerung der Hysteresekurve erfasst wird, wobei,
    - während der Durchsteuerung der Hysteresekurve ein Signal abgeleitet wird, dessen zeitlicher Verlauf den zeitlichen Verlauf der tangentialen Magnetfeldstärke zugeordnet und daraus bestimmt ist, ferner
    - zur Bestimmung von Längs-Resteigenspannungen anhand der Hysteresekurve Änderungen der Überlagerungspermeabilität ($\mu_\Delta$ =

    $$\left( \mu_\Delta = \frac{\Delta \dot{B}}{\Delta H} \right)$$ ) in Abhängigkeit von der tangentialen Magnetfeldstärke erfasst und als Messgrößen jeweils das Maximum ($\mu_{\Delta max}$) der geänderten Überlagerungspermeabilität, der zugehörige Wert ($H_{C\mu}$) der tangentialen Magnetfeldstärke und/oder die Aufweitung der Änderungskurve der Überlagerungspermeabilität bei unterschiedlichen Werten ($\Delta H_\mu$) der Magnetfeldstärke ermittelt werden,
    - wobei außerdem zur Bestimmung der Längs-Resteigenspannungen anhand einer Oberwellenanalyse des Zeitsignals der tangentialen Magnetfeldstärke der Klirrfaktor (K) und/oder die Koerzitivfeldstärke ($H_{co}$) als weitere Messgrößen ermittelt werden und dann
    - anhand der Änderungen dieser Messgrößen als Funktion der mechanischen Spannungen zumindest die longitudinale und/oder transversale Spannungsverteilung der über die Banddicke integrierten Längsspannungen ermittelt und
    - aus dieser Spannungsverteilung die korrespondierende Längs-Resteigenspannungsverteilung und die daraus resultierenden Unplanheiten in dem Metallband ermittelt werden.

2. Verfahren nach Anspruch 1, **dadurch gekennzeichnet, dass** anhand der Änderungen der elektromagnetischen Messgrößen die longitudinale und/oder transversale Spannungsverteilung der über die Banddicke integrierten Querspannungen ermittelt und dann aus dieser Spannungsverteilung die korrespondierende Quer-Resteigenspannungsverteilung und die daraus resultierenden Unplanheiten in dem Metallband ermittelt werden.

3. Verfahren nach einem der Ansprüche 1 oder 2, **dadurch gekennzeichnet, dass** über die Bandbreite und/oder Bandlänge 80 bis 800 Messungen pro Sekunde zur Ermittlung von Messgrößenänderungen durchgeführt werden.

4. Verfahren nach einem der Ansprüche 1 bis 3, **dadurch gekennzeichnet, dass** die Streckgrenze des betreffenden Metallbandes und/oder der Bandzug ermittelt werden, z.B. wechselweise mit der Ermittlung von Unplanheiten.

5. Verfahren nach einem der Ansprüche 1 bis 4, **dadurch gekennzeichnet, dass** die Messungen auf der Bandoberseite und/oder auf der Bandunterseite durchgeführt werden.

6. Verfahren nach einem der Ansprüche 1 bis 5, **dadurch gekennzeichnet, dass** der Luftspalt zwischen dem oder den Messvorrichtungen mit dem Erreger und dem durchlaufenden Metallband in Abhängigkeit von der Banddicke geändert wird.

7. Verfahren nach einem der Ansprüche 1 bis 6, **dadurch gekennzeichnet, dass** die Magnetisierung des durchlaufenden Metallbandes zur Erfassung und Auswertung der elektromagnetischen Messgrößen traversierend über die Bandbreite erfolgt.

8. Verfahren nach einem der Ansprüche 1 bis 6, **dadurch gekennzeichnet, dass** die Magnetisierung des durchlaufenden Metallbandes zur Erfassung und Auswertung der elektromagnetischen Messgrößen in mehrere verschiedene Richtungen in der Bandebene vorgenommen wird, z.B. in Bandlängs-, Bandquer- und Banddiagonalrichtung stationär oder traversierend erfolgt.

9. Verfahren nach einem der Ansprüche 1 bis 8, **dadurch gekennzeichnet, dass** zur Kalibrierung der durch die elektromagnetischen Messgrößen ermittelten Längsspannungen der mittlere Bandlängszug über eine separate Bandzugmessvorrichtung, z.B. Bandzugmessrolle als Kennwort für die Längsspannungen gemessen wird.

**Claims**

1. Method for contactless measurement of the planarity of metal strips made of ferromagnetic materials as they pass through strip-processing lines or cold-rolling units, according to which

    - said metal strip is magnetized in a magnetic field of an exciter which is supplied with an alternating current, whereby the hysteresis curve of the metal strip is traversed at the frequency of the alternating current, and

    - the tangential magnetic field strength on the strip surface which is generated by the exciter is detected by means of a magnetic field strength sensor during the traversing of the hysteresis curve, wherein

    - during the traversing of the hysteresis curve a signal is derived, the temporal variation of which is associated with the temporal variation of the tangential magnetic field strength and is determined therefrom, and furthermore,

    - in order to determine longitudinal residual internal stresses based on the hysteresis curve, changes in the beat permeability $(\mu_\Delta = \frac{\Delta B}{\Delta H})$ are detected as a function of the tangential magnetic field strength and in each case the maximum ($\mu_{\Delta max}$) of the changed beat permeability, the associated value ($Hc\mu$) of the tangential magnetic field strength and/or the widening of the change curve of the beat permeability at different values ($\Delta H_\mu$) of the magnetic field strength are determined as measurement parameters,

    - wherein, in order to determine the longitudinal residual internal stresses based on a harmonic analysis of the time signal of the tangential magnetic field strength, the distortion factor (K) and/or the coercive field strength ($H_{co}$) are also determined as further measurement parameters and then,

    - based on the changes in these measurement parameters as a function of the mechanical stresses, at least the longitudinal and/or transverse stress distribution of the longitudinal stresses integrated over the strip thickness is determined and

    - from this stress distribution the corresponding longitudinal residual internal stress distribution and the resulting non-planarities in the metal strip are determined.

**2.** Method according to Claim 1, **characterized in that**, based on the changes in the electromagnetic measurement parameters, the longitudinal and/or transverse stress distribution of the transverse stresses integrated over the strip thickness are determined and then from this stress distribution the corresponding transverse residual internal stress distribution and the resulting non-planarities in the metal strip are determined.

**3.** Method according to either of Claims 1 and 2, **characterized in that** 80 to 800 measurements per second are carried out over the strip width and/or strip length in order to determine changes in measurement parameters.

**4.** Method according to one of Claims 1 to 3, **characterized in that** the stretching limit of said metal strip and/or the strip tension are determined, for example in a manner alternating with the determination of non-planarities.

**5.** Method according to one of Claims 1 to 4, **characterized in that** the measurements are carried out on the upper side of the strip and/or on the underside of the strip.

**6.** Method according to one of Claims 1 to 5, **characterized in that** the air gap between the measurement device(s) with the exciter and the passing metal strip is varied as a function of the strip thickness.

**7.** Method according to one of Claims 1 to 6, **characterized in that** the magnetization of the passing metal strip in order to detect and evaluate the electromagnetic measurement parameters takes place across the strip width.

**8.** Method according to one of Claims 1 to 6, **characterized in that** the magnetization of the passing metal strip in order to detect and evaluate the electromagnetic measurement parameters is carried out in a number of different directions in the strip plane, for example takes place at a fixed position or across the strip longitudinal direction, strip transverse direction and strip diagonal direction.

**9.** Method according to one of Claims 1 to 8, **characterized in that**, in order to calibrate the longitudinal stresses determined by the electromagnetic measurement parameters, the central strip longitudinal tension is measured by means of a separate strip tension measuring device, e.g. a strip tension measuring roller, as a characteristic value for the longitudinal stresses.

**Revendications**

**1.** Procédé de mesure de planéité sans contact de bandes métalliques en matériaux ferromagnétiques au cours de leur passage dans des chaînes de fabrication de bandes ou trains de laminoirs à froid, selon lequel

    - la bande métallique concernée est magnétisée dans un champ magnétique d'un excitateur alimenté en courant alternatif, la courbe d'hystérésis de la bande métallique étant déclenchée par la fréquence du courant alternatif et

- l'intensité tangentielle du champ magnétique produite par l'excitateur sur la surface de la bande est détectée à l'aide d'un capteur d'intensité de champ magnétique pendant le déclenchement de la courbe d'hystérésis, procédé dans lequel

- un signal est déduit pendant le déclenchement de la courbe d'hystérésis, signal dont l'allure dans le temps est associée à l'allure dans le temps de l'intensité tangentielle du champ magnétique et en est définie, en outre

- pour la détermination de contraintes internes résiduelles longitudinales à l'aide de la courbe d'hystérésis, des variations de la perméabilité différentielle ($\mu_? = ?B/?H$) sont détectées en fonction de l'intensité de champ magnétique tangentielle et le maximum ($\mu_{?max}$) de la perméabilité différentielle modifiée, la valeur correspondante ($H_{C_\mu}$) de l'intensité de champ magnétique tangentielle et/ou l'élargissement de la courbe de modification de la perméabilité différentielle pour différentes valeurs ($?H_\mu$) de l'intensité de champ magnétique sont à chaque fois déterminés en tant que grandeurs de mesure,

- par ailleurs, pour la détermination des contraintes internes résiduelles longitudinales, le taux d'harmoniques (K) et/ou la coercitivité ($H_{co}$) sont déterminés comme autres grandeurs de mesure à l'aide d'une analyse d'harmoniques du signal de temps de l'intensité de champ tangentielle, puis

- au moins la répartition de contraintes longitudinale et/ou transversale des contraintes longitudinales intégrées sur l'épaisseur de la bande est déterminée à l'aide des variations de ces grandeurs de mesure en fonction des contraintes mécaniques et

- la répartition de contraintes internes résiduelles longitudinales correspondante et les défauts de planéité qui en résultent dans la bande métallique sont déterminés à partir de cette répartition de contraintes.

2. Procédé selon la revendication 1, **caractérisé en ce que** la répartition longitudinale de contraintes et/ou transversale des contraintes transversales intégrées sur l'épaisseur de la bande est déterminée à l'aide des variations des grandeurs de mesure électromagnétiques, puis la répartition transversale de contraintes internes résiduelles correspondante et les défauts de planéité qui en résultent dans la bande métallique sont déterminés à partir de cette répartition de contraintes.

3. Procédé selon la revendication 1 ou 2, **caractérisé en ce que** 80 à 800 mesures par seconde sont effectuées sur la largeur et/ou sur la longueur de la bande pour la détermination de variations des grandeurs de mesure.

4. Procédé selon l'une quelconque des revendications 1 à 3, **caractérisé en ce que** la limite apparente d'élasticité de la bande métallique concernée et/ou la traction de la bande sont déterminées, par exemple en alternance avec la détermination de défauts de planéité.

5. Procédé selon l'une quelconque des revendications 1 à 4, **caractérisé en ce que** les mesures sont effectuées sur le côté supérieur et/ou sur le côté inférieur de la bande.

6. Procédé selon l'une quelconque des revendications 1 à 5, **caractérisé en ce que** l'entrefer entre le ou les dispositifs de mesure avec l'excitateur et la bande métallique de passage est modifié en fonction de l'épaisseur de la bande.

7. Procédé selon l'une quelconque des revendications 1 à 6, **caractérisé en ce que** la magnétisation de la bande métallique de passage pour la détection et l'évaluation des grandeurs de mesure électromagnétiques s'effectue en traversant la largeur de la bande.

8. Procédé selon l'une quelconque des revendications 1 à 6, **caractérisé en ce que** la magnétisation de la bande métallique de passage pour la détection et l'évaluation des grandeurs de mesure électromagnétiques s'effectue dans plusieurs directions différentes dans le plan de la bande, par exemple dans la direction longitudinale, transversale et diagonale de la bande de façon stationnaire ou en traversant.

9. Procédé selon l'une quelconque des revendications 1 à 8, **caractérisé en ce que**, pour l'étalonnage des contraintes longitudinales déterminées par les grandeurs de mesure électromagnétiques, la traction longitudinale moyenne de la bande est mesurée par l'intermédiaire d'un dispositif de mesure de traction séparé, par exemple un rouleau de mesure de traction, en tant que valeur caractéristique pour les contraintes longitudinales.

_Fig. 1_

_Fig. 2_

Fig. 3

Fig. 4

Fig. 5

Fig. 6

EP 1 116 952 B1

Fig.7

$H_t$

$H_{CO}$

$t$

Fig.8

$\Delta H\mu$

$\sigma$

Fig.9

$K$

$\sigma$

Fig. 10

$H_{C}\mu$

$\sigma$

Fig. 11

$H_{CO}$

$\sigma$